# EUROPEAN PATENT APPLICATION

(11) **EP 2 595 340 A2**
(43) Date of publication of application: **22.05.2013**
(21) Application number: 12192823.8
(22) Date of filing: 15.11.2012
(51) Int. Cl.: H04L 9/08, H04L 9/32

(54) **Cryptographic document processing in a network**

(30) Priority: 16.11.2011 US 201113297971
(71) Applicant: Certicom Corp., Mississauga, Ontario L4W 0B5 (CA)
(72) Inventor: Rosati, Anthony, Ottawa, Ontario K1S 4T5 (CA); Kravitz, David William, Fairfax, VA Virginia 22031 (US)
(74) Representative: Finnie, Peter John

(57) **Abstract**

Data received over a network is processed by a server. The processing includes determining identity information corresponding to an identity associated with a document represented by document data received over an input port of the server from a sender. At the server, a private key is computed based on: a master private key, and the identity information. At the server digital information is computed based at least in part on the document data using the computed private key. The digital information is stored in a storage medium accessible to the server in association with the identify information.

## Description

### CLAIM OF PRIORITY

This application claims priority to U.S. Patent Application Serial No. 13/297,971 filed on November 16, 2011, the entire contents of which are hereby incorporated by reference.

### FIELD

The present application generally relates to processing data received over a network, and in particular to techniques for cryptographic document processing in a network.

### BACKGROUND

Timestamp processing in a network can be performed using a timestamping authority (TSA) (also known as a "trusted third party"). A TSA can be implemented, for example, as a server that provides a timestamping service to requesters that communicate with the server over the network. The timestamping service can include any or all of generating timestamps, verifying timestamps, and vouching for the integrity of previously generated timestamps. In some systems, timestamps are generated and associated with data (e.g., data representing a document) in a secure way such that it is computationally infeasible to later alter the timestamp associated with the data, even by the TSA or the requester, without that alteration being detected in the verification process. The security may depend on the security of the cryptographic scheme used to perform the timestamping. In some cases, the security may also depend on maintaining the integrity of the TSA.

### DESCRIPTION OF DRAWINGS

FIGS. 1A and 3 are a block diagrams of example timestamping systems.
FIG. 1B is a schematic diagram of an example signed object.
FIG. 2 is a schematic diagram of example timestamping and verification procedures.
FIG. 4 is a flowchart of an example timestamping procedure.

### DESCRIPTION

Documents can be processed by a communication network using identity-based cryptography, in which identity information is used in an encryption process (e.g., using identity values as public keys, or using identity values to generate private or public keys from a master key). In one aspect of some of the techniques described herein, identity-based signatures are used in which private keys are generated at a server based on identity information and used for generating digital signatures. A digital signature generated using an identity-based signature scheme can be used for a variety of types of document processing, including timestamping services. A TSA that uses identity-based signatures is able to maintain security of the private keys and does not require private keys to be distributed over the network. Techniques for maintaining integrity of the TSA may include securing the TSA clock against undetected tamper, as well as preventing exposure of the TSA's private keying material (e.g., master private keys or other cryptographic information such as initialization vectors). By retrieving previously generated timestamps from trusted local or remote storage, a TSA may be able to guard against undetected compromise of its private keying material in that if a request is made of that TSA to verify a previously generated timestamp and such timestamp exists outside of the TSA facility, but not within its trusted store, it may have been illicitly generated.

A timestamp may be encoded within digital information (e.g., within a signed object that includes a digital signature) that may be stored in an archive managed by the TSA. In some timestamping services, a document is initially processed and represented by document data (such as a hash value, or a compressed version of the document). The document data is then cryptographically signed by the TSA, which yields resulting digital information comprising the timestamp. The timestamp can represent a date and a time of day at which the timestamping was performed. A requester may request that the TSA associate a timestamp with data representing a particular document soon after creation or modification of the document, such that the timestamp represents an approximate time of creation or modification of the document. During verification, the TSA can access the stored digital information and perform a verification process for unverified information submitted by a requester (potentially a different requester than the one that requested the timestamping), or the TSA can distribute or publish the digital information to enable other entities to perform the verification process. Verification can be used, for example, to provide evidence or prove the existence of a particular document in a particular state before a given point in time. Such verification can additionally be used to provide evidence of the identity of a person or group associated with the particular document.

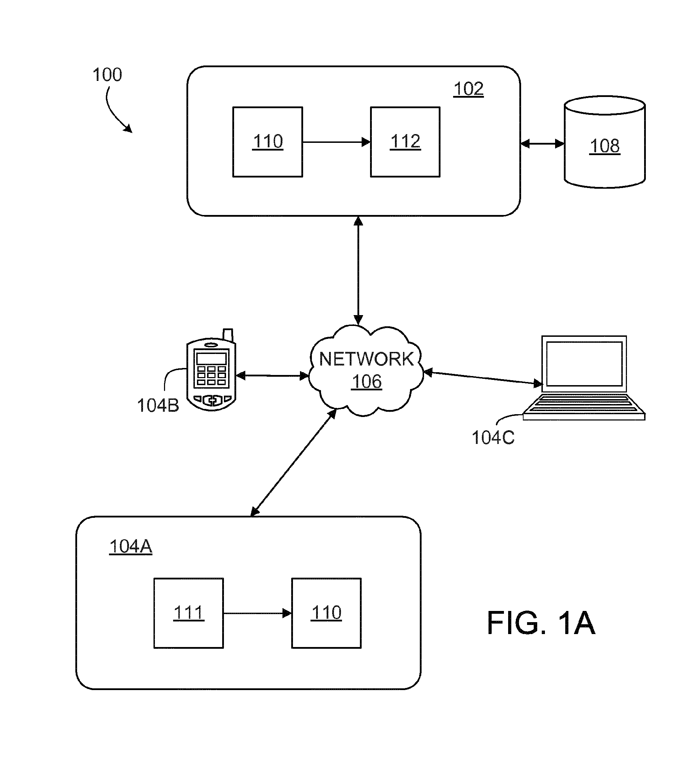

FIG. 1A shows an example system 100 for providing a timestamping service (e.g., as a web service). A TSA server 102 receives requests from requesters 104A, 104B, and104C such as desktop computers or mobile devices, or any other device that is configured to transmit a request (e.g., initiated by a user of the device) to the TSA server 102 over a network 106. The network 106 may include any number of networks interconnected with each other. The network 106 may include any type or form of network(s) including any of the following: a wide area network (such as the Internet), a local area network, a telecommunications network, a data communication network, a computer network, a wireless network, a wireline network, a point-to-point network, and a broadcast network. The network 106 may include any number of repeaters, appliances, devices, servers, and storage media, for example. The TSA server 102 generates a signed object 112 from document data 110, which respresents a document 111, received from a requester 104A. The TSA server 102 is in communication with a storage system 108, which may be integrated with the TSA server 102 or coupled to the TSA server 102 over an interface or a network. The storage system 108 stores (in a non-volatile memory or other storage medium) a collection of signed objects (e.g., digital signatures, or other objects representing the digital information generated by the TSA server 102) that are managed by the TSA server 102. Alternatively, the TSA server 102 may release signed objects immediately upon generation and may delete such signed objects from memory upon successful transmission.

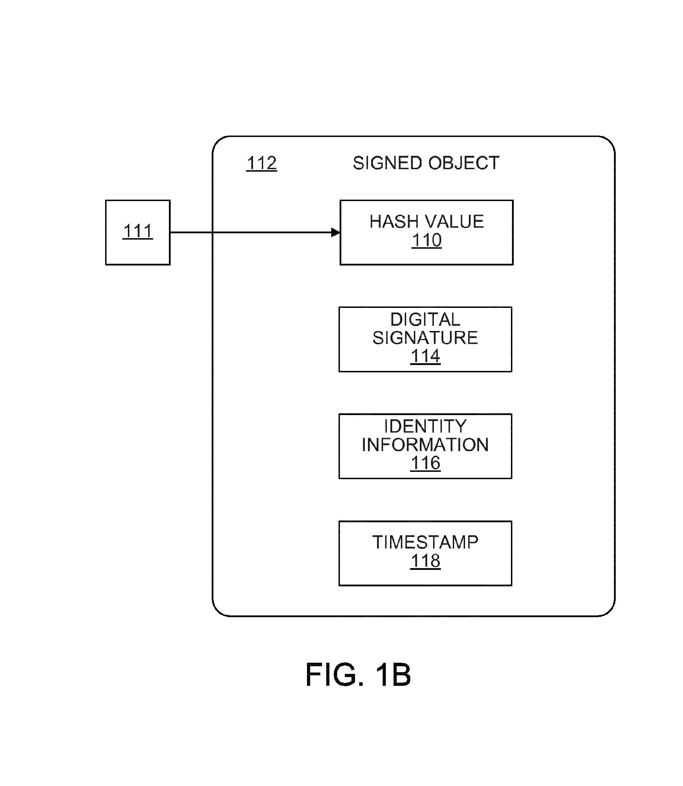

FIG. 1B shows an example of a signed object 112, and components that may be included in the signed object 112, in some implementations of the TSA server 102. The signed object 112 includes a hash value 110 generated from a document 111. The signed object 112 includes a digital signature 114 generated from the hash value 110 using the identity-based signature scheme, as described in more detail below. Identity information 116 that was used to generate the digital signature 114 can also be included in the signed object 112. Alternatively, in other examples, the identity information 116 is obtained based on a request to verify the signed object 112, as described in more detail below. When the identity-based signature scheme is used for a timestamping service, the signed object 112 also includes a timestamp 118.

Some implementations of the timestamping service that use identity-based signing, use a public key that corresponds to, or is generated from, a widely known identity value, which may be represented, for example, as an ASCII string. A trusted entity, called the Private Key Generator (PKG), generates the private keys corresponding to the identity-based public keys. The PKG generates the private keys based on a master private key, which is kept secret by the PKG. A master private key is a key that is used to generate individual private keys that are associated with a particular identity of an individual, such that there is a one-to-one mapping between an identity value and a corresponding private key generated by performing an operation on the master private key and the identity value. In some identity-based signature schemes, instead of using the identity value directly as a public key, a master public key is used (by the PKG, or by other entities) for generating individual public keys. For example, the PKG, or other entity, is able to compute an individual public key associated with an identity value i based on a combination of the master public key and the identity value i.

In some identity-based signature schemes, there is a single master key, which is held privately by the PKG, and which can be used as both the master private key and the master public key. In some implementations, the master key and one or more global system (or domain) parameters are combined with an identity value i in order to generate an individual private key or public key. The use of the master key, alone or in combination with one or more global system parameters, is intended to ensure that knowledge of the particular privately held master key or global system parameters is required in order to successfully generate or recover the individual private or public keys. In some identity-based signature schemes, the identity value i may encompass additional data such as that pertaining to a validity period, for example. Such additional data may be appended or verified prior to initiating the combining operation with the master key.

In some identity-based signature schemes, a user identified with the identity value i communicates with the PKG to request the individual private key corresponding to the identity value i. In response to the request, the PKG computes the individual private key based on a combination of the master private key and the identity value i, and transmits the individual private key to the user over a secure connection. In some implementations of the system 100, the TSA server 102 performs some of the functions of a PKG, but does not need to transmit individual private keys to any other entity since the individual private keys are used by the TSA server 102, as described in more detail below. One advantage of keeping private keys at the TSA server 102 is that there is no need to risk communicating the private keys over connections that may not be completely secure or to imposter entities that are not authorized to use the identity value i.

In some implementations, email addresses assigned to users are used as both identity information and as public keys to verify signed objects. User A operating a device shown as requester 104A is assigned an email address A@B.com and submits document data 110 representing his/her document 111 (e.g., a hash value generated from the document) for timestamping. In response, the TSA server 102 determines the identity of user A and obtains user A's private key to cryptographically sign the document data 110 to generate a signed object 112 that includes a timestamp. For example, the TSA server 102 may determine the identity of A from the email address A@B.com from which an email including the document data 110 was sent. Alternatively, if another user is operating the device shown as requester 104A, sending the document data 110 on behalf of user A, the TSA server 102 may determine the identity of A from the email address A@B.com or other identity information provided by the requester 104A. The resulting signed object 112 is stored by the TSA server 102 in the storage system 108, and is available for any requester to verify with the knowledge of the email address A@B.com, which is used as a public key in the verification process. Implementations that use this form of identity-based signatures have an advantage that documents may be associated with the individuals who created or modified them by easily identifiable and recognizable identification information (email addresses in this example) that also corresponds to such individuals' public keys. In addition, by generating the signed objects at the TSA server 102 with a private key based on the identity information, the private keys do not need to be distributed to users or otherwise leave the TSA server 102, which enhances the ability of the system 100 to maintain security and reduce potential security threats. Examples of efficient identity-based signature schemes are those based on bilinear pairings on elliptic curves, such as Weil or Tate pairings.

The identity information does not necessarily have to identify a single individual as a requester. Some implementations may use one or more generally identifiable strings, such as company name (e.g., "newco"), as the public key for verification. For example, if an unverified document thought to be timestamped by or on behalf of an individual associated with a particular company is submitted to the TSA server 102, the requester would use the company name, newco in this example, to verify the document. In other implementations, a user or organization may be allowed to choose (according to a predetermined policy) an identifier string to be used as a public key, or to be used in conjunction with a master public key or global system parameters to generate a public key.

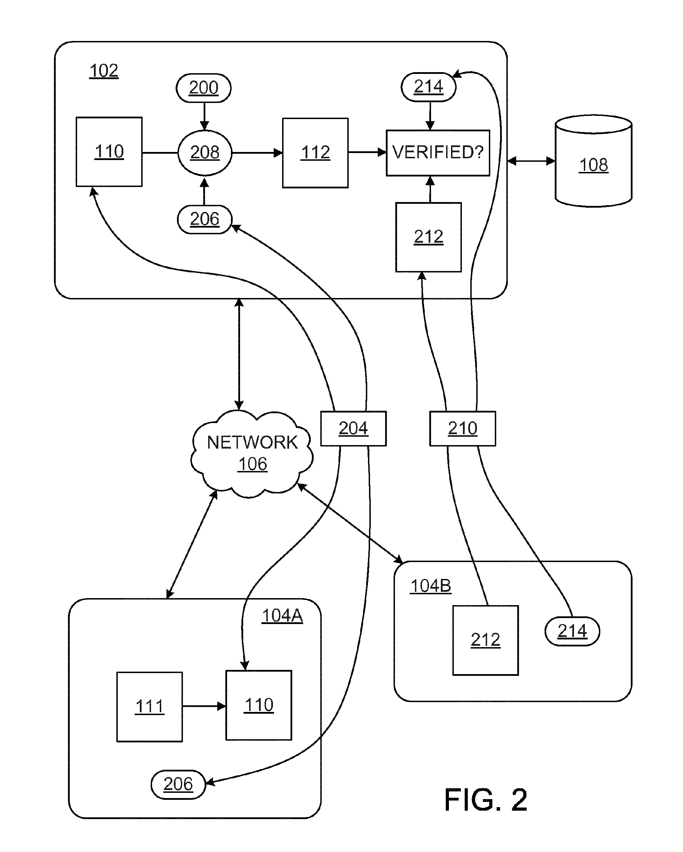

Reference is now made to FIG. 2, which shows a schematic diagram of example interactions with the TSA server 102, for generating and verifying timestamps. As part of initialization procedures of the timestamping service provided by the TSA server 102, the TSA server 102 generates a master private key 200 (and optionally a master public key). The master private key 200 is kept private by the TSA server 102. The master public key, if generated, may be widely published to a user base for use by users to generate individual public keys for any identity value that is to be associated with a particular document. The technique used to publish the master public key is able to ensure that distributed copies of the master public key are reliable (e.g., they have not been altered), or at least that any unauthorized alteration is detectable.

A user of a device represented as requester 104A initiates a request for timestamping the document 111. Optionally, the requester 104A is configured to generate derived document data (e.g., a hash value) from the document 111. If no hashing or other transformative function is performed, then the document data 110 to be transmitted to the TSA server 102 may be identical to the document 111. The requester 104A transmits data 204 to the TSA server 102 that includes the document data 110 and an identity value 206. For example, the identity value may be the email address from which the data 204 was sent (e.g., included in an email header). Alternatively, the identity value 206 may be a public key that has been generated by the requester 104A for the identity of a document originator or other user that is to be associated with the document 111. Alternatively, the identity value 206 may be an email address of a document originator or other user that is to be associated with the document 111. Optionally, the TSA server 102 may contact the user intended to be associated with the document 111 in order to assess whether the requester 104A has been authorized to submit documents or derived document data on behalf of that user.

The TSA server 102 may securely transmit the signed object 112 that results from the following procedure to the intended user, as represented by the requester 104A, and not make the signed object 112 available to any other entity (including the requester 104A). In such a case, the intended user may elect to not distribute the signed object 112 to other entities, e.g., if the signed object 112 had been generated without appropriate authorization. The secure transmission of the signed object 112 to the intended user may include determining the identity of the requester 104A.

The TSA server 102 receives the data 204 from the requester 104A and performs a timestamping procedure. The TSA server 102 determines an identity from the identity value 206, and generates an individual private key 208 corresponding to that identity (or retrieves a stored previously generated private key for that identity) based on the master private key 200 and the determined identity. The TSA server 102 cryptographically signs the document data 110 included in the data 204 using the generated individual private key 208. The resulting signed object 112 includes a cryptographically secure timestamp based on a time reference accessible to the TSA server 102 (e.g., a local clock or calendar). The TSA server 102 stores the signed object 112 in the storage system 108. Such signed object 112 may optionally be deleted from the storage system 108 upon evidence of successful transmission of the signed object 112, e.g., to the requester 104A and/or to the intended user that has been cryptographically associated with the document or derived document data by means of the signed object 112.

The signed object 112 can be made available (privately or publicly) for use in verification procedures. For example, the requester 104A, or a different requester 104B, may later verify that unverified document data and an unverified identity value correspond to the same document data that was previously timestamped based on the same identity value. The TSA server 102 receives data 210 including unverified document data 212 and an unverified identity value 214. The TSA server 102 may optionally obtain an individual public key that is determined based on the master public key and the unverified identity value 214. In some implementations, the individual public key is determined by the requester and included in the data 210 sent to the TSA server 102 (e.g., as alternative unverified identity information in place of the unverified identity value 214), and in other implementations the individual public key is determined by the TSA server 102. The TSA server 102 determines whether the unverified document data 212 corresponds to the document data that was used to compute the signed object 112 that was stored in the storage system 108, and whether the unverified identity value 214 corresponds to the identity value 206.

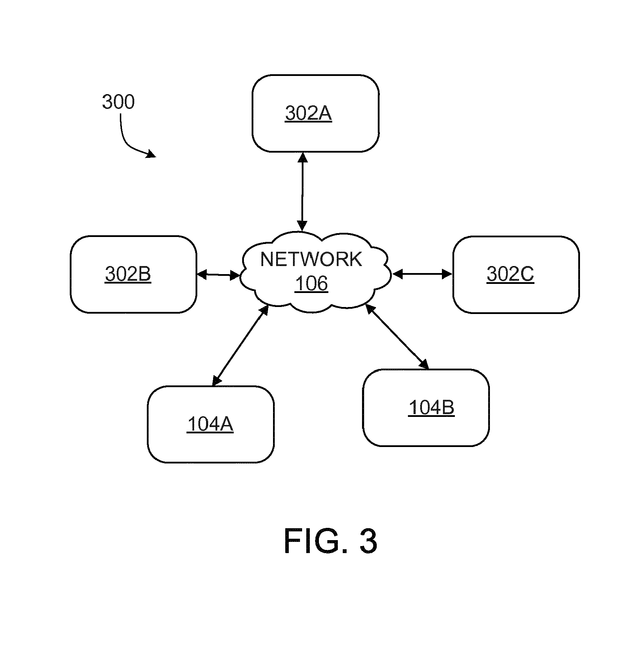

FIG. 3 shows an example system 300 for providing a timestamping service using multiple TSA servers 302A-302C. TSA server 300A is a master TSA server that manages the master private key that is used to generate individual private keys based on identity information. Optionally, if public keys are to be generated from a master public key, the TSA server 300A also manages the master public key that is used to generate individual public keys based on identity information. The other TSA servers 300B and 300C are subordinate TSA servers that are also able to perform timestamping, but do so using a subset of private keys provided by the master TSA server 300A. For example, the master TSA server 300A partitions the potential private keys that may be needed into subsets based on a partitioning of known or potential identities represented by respective identity values (e.g., email addresses, user names, or employee identification numbers). The master TSA server 300A securely distributes respective subsets of private keys to the subordinate TSA servers 300B and 300C, and maintains a subset for use by the master TSA server 300A. In some implementations, the subsets may overlap such that the master TSA server 300A provides a particular private key associated with a particular identity to multiple subordinate TSA servers, for the purpose of handling throughput and/or as hot spare(s), for example.

Individual public keys may be distributed to subordinate TSA servers in a similar manner, or, a requester may acquire the master public key directly or indirectly from the master TSA server 300B to generate individual public keys based on identity information using the same procedure used by the master TSA server 300A. Public knowledge of the master public key does not compromise security of the timestamping service, so the master public key may therefore be made accessible without requiring any form of login or authentication. However, the requester should be able to trust that the master public key is authentic. The method of distributing knowledge of the master public key should be resistant to undetected substitution or modification by unauthorized parties. In implementations that use subordinate TSA servers, such subordinate TSA servers are considered unauthorized to substitute or modify the master public key without permission from the master TSA server. In some implementations, individual public keys are distributed to the subordinate TSA servers, but not individual private keys, and the subordinate TSA servers perform verification using the public keys, but not timestamping, which would require individual private keys.

As described above, the TSA server 102 (or TSA servers 302A-302C) does not necessarily require access to the actual document 111. A cryptographic hash function may be applied to the document 111 to generate a hash value as the document data 110 that is sent to the TSA server 102. Alternatively, the document 111 may be sent to the TSA server 102, and the TSA server 102 may apply a cryptographic hash function to the document 111 to generate the document data 110 that is to be cryptographically signed using the appropriate private key to generate the signed object 112. In either case, if the document 111 is modified from the state it was in when the cryptographic hash function was applied, or if the document data 110 is modified from the state it was in when cryptographically signed, such modifications would be detectable when attempting to verify an unverified version of the document 111 based on the signed object 112.

In one example implementation, a requester provides a document (or its hash value) to be timestamped along with cryptographic evidence or proof of an originator of the document (or "proof of origin"). The identity of such originator determines the identity information used by the TSA server to generate a private key for signing the document. The TSA server does not necessarily require the originator of the document to also be the requester that provides the document. Asymmetric or symmetric key cryptography may be used to address document origination and data integrity. A requester who provides a document on behalf of or as a proxy of a document originator may be able to (through benign or malicious inaction) substantially delay initiating their request for timestamping relative to the earlier time at which the potential requester receives a document-specific proof of origin to pass to the TSA server in some form as part of the eventual request process. However, such delay may result in rejection of the request by the TSA server, or ultimate rejection of the TSA-generated timestamp as unsuitable by an entity that accesses the proof, in that the document-specific proof of origin may include a time window that bounds the time that is specified by a TSA-generated timestamp within a verified signed object. In any case, even through malicious action, a requester may not be able to successfully submit prior to generating, or receiving as proxy, a suitable document-specific proof of origin provided such document-specific proofs of origin are not feasibly forgeable. Proof of origin, as the term is used herein, does not necessarily imply proof that the document did not exist in the same or similar form as created by an entity potentially distinct from the current originator of the document.

In another example implementation, the proof of origin of the document is obtained using an end-to-end procedure, in which a relying party that verifies a signed object (or relies on the TSA for such verification) independently verifies the identity of the originator of the document. Under such a scenario, a TSA may not require that it is able to independently verify document origination since the signed objects that the TSA generates will not be applied by a relying party without that relying party first assessing or determining document origination if that is a prerequisite for that relying party's ultimate reliance on the signed object. Asymmetric or symmetric key cryptography may be used to address document origination and data integrity. Such evidence of document origin and data integrity may pass through the TSA as conduit or may be delivered to a potential relying party via an out-of-band channel that is independent of any TSA.

In yet another example implementation, the proof of origin of the document is obtained by both the TSA and by potential relying parties. Asymmetric or symmetric key cryptography may be used to address document origination and data integrity, where the techniques used may differ between the evidence that is verified by the TSA and that verified by potential relying parties. The evidence verified by potential relying parties may pass through the TSA as conduit or may be delivered via an out-of-band channel that is independent of any TSA.

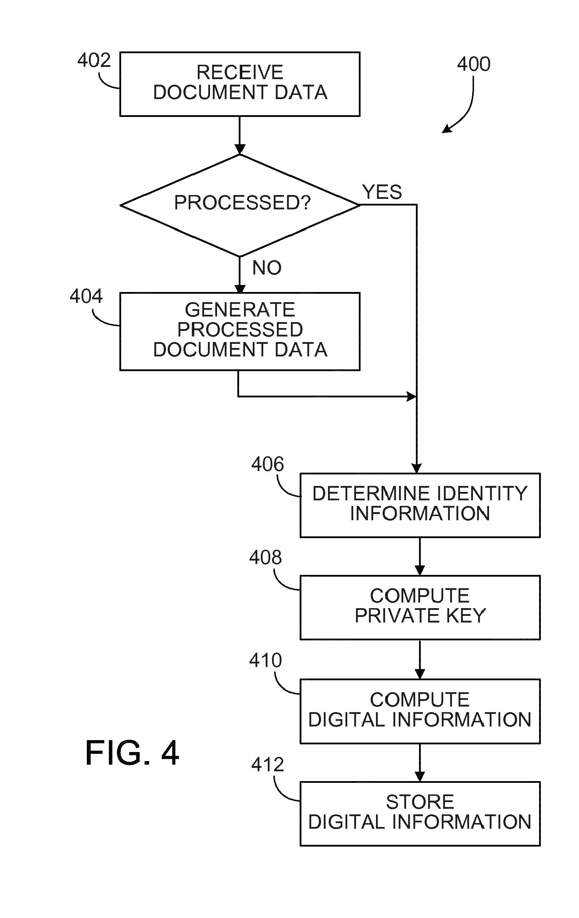

FIG. 4 shows a flowchart for an example timestamping procedure 400, which may be part of a procedure performed by a TSA server (e.g., TSA server 102) that includes additional steps not shown. The procedure 400 includes receiving (402) document data over an input port of the server from a sender. Optionally, the procedure 400 generates (404) processed document data (e.g., using a hash function) if the received document data corresponds to an original document that has not already been processed in that manner. The procedure 400 includes determining (406) identity information corresponding to an identity associated with a document represented by the document data. The procedure 400 includes computing (408) a private key based on: a master private key, and the identity information. The procedure 400 includes computing (410) digital information comprising a timestamp based at least in part on the document data using the computed private key. The procedure 400 includes storing (412) the digital information in a storage medium accessible to the server in association with the identify information.

The timestamping techniques described herein may be implemented in a number of computing devices, including, without limitation, servers, suitably programmed general purpose computers, and mobile devices. The techniques may be implemented by way of software containing instructions for configuring a processor to carry out the functions described herein. The software instructions may be stored on any suitable computer-readable memory, including CDs, RAM, ROM, Flash memory, etc.

It will be understood that the system described herein and the module, routine, process, thread, or other software component implementing the described method/process performed by the system may be realized using standard computer programming techniques and languages. The techniques described herein are not limited to particular processors, computer languages, computer programming conventions, data structures, or other such implementation details. The described processes may be implemented as a part of computer-executable code stored in volatile or non-volatile memory, as part of an application-specific integrated chip (ASIC), etc.

In one aspect, in general, a method for processing data received over a network by a server includes: determining identity information corresponding to an identity associated with a document represented by document data received over an input port of the server from a sender; computing, at the server, a private key based on: a master private key, and the identity information; computing, at the server, digital information based at least in part on the document data using the computed private key; and storing the digital information in a storage medium accessible to the server in association with the identify information.

Aspects can include one or more of the following features.

The method further includes: receiving unverified document data and unverified identity information at the server; obtaining a public key determined based on: a master public key associated with the master private key, and the unverified identity information; and determining whether the unverified document data corresponds to the document data that was used to compute the digital information that was stored in the storage medium and whether the unverified identity information corresponds to the identity information that was used to compute the private key, based at least in part on the obtained public key.

The digital information comprises a digital signature cryptographically signed using the computed private key.

The digital signature is contained within a signed object that also contains the document data.

The signed object also contains the identity information.

The digital signature is contained within a signed object that also contains a timestamp indicating a time associated with computing the digital information.

The document data comprises a representation of the document.

The document data further comprises cryptographic evidence that the document was originated by the originator.

The server verifies the cryptographic evidence before computing the digital information.

The representation of the document comprises a hash value generated based on the document.

The server prevents any private keys computed based on the master private key from being transmitted out of a computer system on which the server executes.

The identity information comprises a text string associated with an organization.

The method further includes distributing multiple subsets of keys generated by the server to respective subordinate servers.

The identity associated with the document is an identity of an originator of the document.

In another aspect, in general, a computer readable storage medium stories a computer program for processing data received over a network by a server comprising at least one computer system. The computer program includes instructions for causing the computer system to: determine identity information corresponding to an identity of an originator of a document represented by document data received over an input port from a sender; compute a private key based on: a master private key, and the identity information; compute digital information based at least in part on the document data using the computed private key; and storing the digital information in a storage medium accessible to the server in association with the identify information.

In another aspect, in general, a server for processing data received over a network comprises: an input port coupled to the network configured to receive document data from a sender and store the document data in a memory; and at least one processor coupled to the memory and configured to process the document data. The processing includes: determining identity information corresponding to an identity of an originator of a document represented by the document data; computing a private key based on: a master private key, and the identity information; computing digital information based at least in part on the document data using the computed private key; and storing the digital information in a storage medium accessible to the server in association with the identify information.

Aspects can have one or more of the following advantages.

In some implementations, private keys used to cryptographically sign document data remain under control of a TSA server. For example, by generating the private key based on identity information (e.g., identifying a document originator) from a requester, the TSA is able to perform the functions of a PKG to obtain the private key, and distribution of private keys to potential requesters is not required. Cryptographically signed objects can later be verified using a public key that is also based on identity information, such as an email address or other readily obtainable information.

Other features and advantages of the invention are apparent from the present description, and from the claims.

Certain adaptations and modifications of the described embodiments can be made. Therefore, the above discussed embodiments are considered to be illustrative and not restrictive.

## Claims

1. A method for processing data received over a network by a server, the method comprising:
determining identity information corresponding to an identity associated with a document represented by document data received over an input port of the server from a sender;
computing, at the server, a private key based on: a master private key, and the identity information;
computing, at the server, digital information based at least in part on the document data using the computed private key; and
storing the digital information in a storage medium accessible to the server in association with the identify information.

2. The method of claim 1, further comprising:
receiving unverified document data and unverified identity information at the server;
obtaining a public key determined based on: a master public key associated with the master private key, and the unverified identity information; and
determining whether the unverified document data corresponds to the document data that was used to compute the digital information that was stored in the storage medium and whether the unverified identity information corresponds to the identity information that was used to compute the private key, based at least in part on the obtained public key.

3. The method of claim 1, wherein the digital information comprises a digital signature cryptographically signed using the computed private key.

4. The method of claim 3, wherein the digital signature is contained within a signed object that also contains the document data.

5. The method of claim 4, wherein the signed object also contains the identity information.

6. The method of claim 3, wherein the digital signature is contained within a signed object that also contains a timestamp indicating a time associated with computing the digital information.

7. The method of claim 1, wherein the document data comprises a representation of the document, and preferably the document data further comprises cryptographic evidence that the document was originated by the originator.

8. The method of claim 7, wherein the server verifies the cryptographic evidence before computing the digital information.

9. The method of claim 7, wherein the representation of the document comprises a hash value generated based on the document.

10. The method of claim 1, wherein the server prevents any private keys computed based on the master private key from being transmitted out of a computer system on which the server executes.

11. The method of claim 1, wherein the identity information comprises a text string associated with an organization.

12. The method of claim 1, further comprising distributing multiple subsets of keys generated by the server to respective subordinate servers.

13. The method of claim 1, wherein the identity associated with the document is an identity of an originator of the document.

14. A computer readable storage medium storing a computer program for processing data received over a network by a server comprising at least one computer system, the computer program including instructions for causing the computer system to:
determine identity information corresponding to an identity of an originator of a document represented by document data received over an input port from a sender;
compute a private key based on: a master private key, and the identity information;
compute digital information based at least in part on the document data using the computed private key; and
storing the digital information in a storage medium accessible to the server in association with the identify information.

15. A server for processing data received over a network, the server comprising:
an input port coupled to the network configured to receive document data from a sender and store the document data in a memory; and
at least one processor coupled to the memory and configured to process the document data, the processing including:
determining identity information corresponding to an identity of an originator of a document represented by the document data;
computing a private key based on: a master private key, and the identity information;
computing digital information based at least in part on the document data using the computed private key; and
storing the digital information in a storage medium accessible to the server in association with the identify information.
